# EUROPÄISCHE PATENTSCHRIFT

(11) **EP 1 274 976 B1**
(45) Veröffentlichungstag und Bekanntmachung des Hinweises auf die Patenterteilung: **03.08.2005**
(21) Anmeldenummer: 01938040.1
(22) Anmeldetag: 23.03.2001
(51) Int. Cl.: G01L 9/00, H01L 21/50, G01N 3/42

(54) **DRUCK- UND TEMPERATURSENSOR**
PRESSURE AND TEMPERATURE SENSOR
DETECTEUR DE PRESSION ET DE TEMPERATURE

(30) Priorität: 23.03.2000 DE 10014048
(43) Veröffentlichungstag der Anmeldung: 15.01.2003
(73) Patentinhaber: Diatronic GmbH-Bochum Gesellschaft für Diamant- und Hochtemperatur Elektronik, 44795 Bochum (DE)
(72) Erfinder: Burchard, Michael, 44651 Herne (DE); Zaitsev, Alexander, 58119 Hagen (DE); Burchard, Bernd, 45276 Essen (DE); Denisenko, Andreij, 89075 Ulm (DE); Fahrner, Reinhard Wolfgang, 58097 Hagen (DE); Meijer, Jan, 44892 Bochum (DE); Maresch, Walter V., 44797 Bochum (DE)
(74) Vertreter: Isfort, Olaf, Dr.
(86) Internationale Anmeldenummer: PCT/EP2001/003353
(87) Internationale Veröffentlichungsnummer: WO 2001/071303

(56) Entgegenhaltungen:
- EP-A- 0 742 581
- US-A- 5 831 161
- A.M. ZAITSEV ET AL.: "Diamond-Based Pressure and Temperature Sensors: Application to Diamond Anvil Cells" BULL. LIAISON S.F.M.C., Bd. 11, 1999, Seiten 106-107, XP002177583
- A.M. ZAITSEV ET AL.: "Electronic Devices on Ion Implanted Diamond" JOURNAL OF WIDE BANDGAP MATERIALS, Bd. 7, Nr. 1, Juli 1999 (1999-07), Seiten 4-67, XP001012676

## Beschreibung

Die Erfindung betrifft einen Mikrosensor aus Halbleitermaterial, insbesondere zur Druck- und Temperaturmessung mit integrierten piezoresistiven Elementen. Ferner betrifft die Erfindung ein Verfahren zur Herstellung dieses Mikrosensors sowie Verwendungen dieses Mikrosensors.

Mikroelektronische Sensoren für die Temperatur- und Druckmessung finden immer weitere Verbreitung. Temperatursensoren verwenden im allgemeinen auf Halbleitersubstraten integrierte dotierte Widerstände oder Dioden. Die elektrischen Eigenschaften dieser Bauelemente haben eine wohldefinierte Temperaturabhängigkeit, was für die Funktion als Sensor ausgenutzt wird. Derartige Sensoren eignen sich für die Temperaturmessung von Gasen, Flüssigkeiten und auch von Festkörperoberflächen. Halbleiter-Drucksensoren werden in letzter Zeit zunehmend in der Kraftfahrzeugtechnik eingesetzt. Sie dienen zur Steuerung des Zündzeitpunktes und der Kraftstoffeinspritzung. Die Funktion solcher Drucksensoren basiert üblicherweise auf einer dünnen Halbleitermembran, auf deren Oberfläche Dehnungselemente integriert sind. Bei einer Druckbeaufschlagung wird die Membran ausgelenkt, worauf die auf der Membran befindlichen elektrischen Bauelemente reagieren. Derartige mikroelektronische Drucksensoren eignen sich allerdings ausschließlich für die hydrostatische Druckmessung. Durch die mechanischen Eigenschaften der dünnen Halbleitermembran ist der Druckmeßbereich mehr oder weniger eingeschränkt. In der Regel muß ein nicht unerheblicher meßelektronischer Aufwand betrieben werden, um die ebenfalls vorhandene Temperaturabhängigkeit der mikroelektronischen Bauelemente bei der Druckmessung zu berücksichtigen.

A.M. ZAITSEV ET AL. weisen in: 'Diamond-Based Pressure and Temperature Sensors: Application to Diamond Anvil Cells' BULL. LIAISON S.F.M.C., Bd. 11, 1999 Seiten 106-107, XP002177583 auf die Möglichkeit hin. Druck- und Temperatursensoren direkt in Diamantkristalle einzubetten. Dies gelinge durch die Nutzung von Diamant-basierenden p-i-p elektronischen Mikrodioden als Sensoren.

Des weiteren beschreiben A.M. ZAITSEV ET AL. in: 'Electronic Devices on Ion Implanted Diamond' JOURNAL OF WIDE BANDGAP MATERIALS, Bd. 7, Nr. 1, Juli 1999 (1999-07), Seiten 4-67, XP001012676 die Ionenimplantation als ein grundlegendes Verfahren zur Herstellung von mikroelektronischen Einrichtungen auf Diamantbasis. Zur technologischen Nutzbarmachung solcher Halbleiterelemente nennen sie unter anderem Druck-und Temperatursensoren.

Einen weiteren mikroelektronischen Kraft- und Druckmeßwandler schlägt die US-4 410 871 vor. Es handelt sich hierbei um ein Sensorelement der zuletzt beschriebenen Art mit einer dünnen Halbleitermembran mit darauf integrierten piezoresistiven Elementen. Eine spezielle Wheatstone-Brückenschaltung, die ebenfalls auf dem Halbleitersubstrat integriert ist, wird dabei zur Messung der Widerstandsänderung der piezoresistiven Elemente benutzt. Um der Halbleitermembran die Durchbiegung bei einer Krafteinwirkung zu ermöglichen, ist diese über einem ringförmigen Gehäuse angeordnet. Die piezoresistiven Sensoren werden auf der kreisförmigen Membran durch einen Diffusionsprozeß hergestellt. Zur Kontaktierung dienen vergrabene Kontakte, die mittels Ionenimplantation erzeugt werden.

Der vorbekannte Halbleiter-Drucksensor hat eine Reihe von Nachteilen: Zum einen ist, wie oben bereits erwähnt, der Meßbereich durch die Dimensionierung der Membran stark eingeschränkt. Derartige Sensoren lassen sich für die Messung von mittleren Drücken bis maximal einigen Kilobar verwenden. Höhere Drücke führen zur Zerstörung der empfindlichen Sensorelemente. Nachteilig ist des weiteren, daß zur Herstellung solcher Drucksensoren eine Vielzahl halbleitertechnologischer Prozeßschritte benötigt wird. Schon allein die Herstellung der mikromechanischen Membran erfordert anisotrope Strukturierungstechniken und ist dadurch extrem aufwendig. Hinzu kommt die Integration der verschiedenen meßelektronischen Elemente, was mehrere Maskierungsschritte mit anschließender Diffusion bzw. Ionenimplantation erfordert. Dadurch wird der vorbekannte Drucksensor zu einem extrem teuren Spezialbauteil, dem nur wenige Einsatzbereiche, etwa in der Kraftfahrzeugtechnik, vorbehalten sind.

Entsprechend liegt der vorliegenden Erfindung die Aufgabe zugrunde, einen universell einsetzbaren Druck-, Kraft- und Temperatursensor bereitzustellen, der zu geringen Kosten in großen Stückzahlen herstellbar ist. Der Sensor soll über einen großen Meßbereich, was sowohl die Temperaturmessung als auch die Druckmessung angeht, verfügen. Insbesondere soll sich der Sensor dafür eignen, Drücke von einigen GPa und darüber zu messen. Der eigentliche Meßvorgang soll problemlos mittels einer technisch einfachen Auswerte-Elektronik möglich sein. Des weiteren soll der Sensor unempfindlich und mechanisch stabil sein, so daß die Verwendung eines zusätzlichen Gehäuses überflüssig wird. Es soll auf diese Weise ein problemlos handhabbarer Prüfkörper zur Verfügung stehen, der für eine ortsaufgelöste Druck-, Kraft- und Temperaturmessung geeignet ist.

Diese Aufgabe wird bei einem Mikrosensor der eingangs genannten Art durch wenigstens zwei in unterschiedlicher Tiefe unter der Halbleiteroberfläche vergrabene, einander krenzende oder zummindest teilweise überlappende, elektrisch leitende Schichten mit jeweils wenigstens einem elektrischen Kontakt gelöst.

Das Meßprinzip des erfindungsgemäßen Mikrosensors beruht auf der Temperatur- und Druckabhängigkeit des Stromflusses durch die elektrisch leitenden Schichten. Die elektrische Leitfähigkeit und damit der Stromfluß ist abhängig von der Konzentration der Ladungsträger im Halbleitermaterial. Die Temperaturabhängigkeit der Ladungsträgerkonzentration ist bei dotierten Halbleitermaterialien abhängig von der Aktivierungsenergie der elektrisch aktiven Zentren, während bei undotierten, intrinsisch halbleitenden Materialien die Temperaturabhängigkeit der Ladungsträgerkonzentration durch die elektronische Bandlücke zwischen Valenz- und Leitungsband bestimmt wird. Dies wird bei dem erfindungsgemäßen Mikrosensor zur Temperaturmessung ausgenutzt, da entsprechend sowohl der Stromfluß innerhalb einer elektrisch leitenden Schicht als auch zwischen zwei unterschiedlichen elektrisch leitenden Schichten von der Temperatur abhängig ist. Die Aktivierungsenergie und die Energie der Bandlücke sind Kenngrößen des verwendeten Halbleitermaterials bzw. des verwendeten Dotierstoffes, so daß diese Werte zur Kalibrierung des Temperatursensors verwendet werden können.

Die Funktionsweise des erfindungsgemäßen Mikrosensors basiert bei der Druckmessung auf der anisotropen Piezoresistivität zwischen den in unterschiedlicher Tiefe vergrabenen elektrisch leitenden Schichten. Eine auf die Oberfläche des Sensors einwirkende Kraft bewirkt eine elastische Verformung des Halbleitermaterials. Dies wiederum bewirkt eine uniaxiale Widerstandsänderung zwischen den elektrisch leitenden Schichten. Die damit verbundene Änderung des Stromflusses parallel zur Deformationsrichtung ist deutlich meßbar und kann dazu herangezogen werden, auf den Druck bzw. die angreifende Kraft zurückzuschließen.

Die elastische Deformation des Halbleitermaterials hat zwar einen ausgeprägten Einfluß auf den Stromfluß zwischen den in unterschiedlicher Tiefe vergrabenen Schichten. Weitgehend unbeeinflußt bleiben allerdings die elektrischen Eigenschaften innerhalb einer einzelnen Schicht. Da also der Stromfluß innerhalb einer Schicht und der Stromfluß zwischen zwei unterschiedlichen Schichten auf unterschiedliche, jeweils charakteristische Weise von Temperatur und Druck abhängig sind, erlaubt der erfindungsgemäße Mikrosensor vorteilhafterweise eine gleichzeitige Messung beider Größen. Damit ist auch die Temperaturabhängigkeit der Piezoresistivität bei der Druckmessung im Gegensatz zu den vorbekannten Drucksensoren kein Problem. Die gleichzeitige Messung von Druck und Temperatur ermöglicht es, den Temperaturwert bei der Bestimmung des Druckes unmittelbar zu berücksichtigen. Des weitern zeigt der Sensor bei der Druckmessung eine weitgehend lineare Charakteristik. Damit kann eine komplizierte Auswerteelektronik zur Kompensation von Temperatureinflüssen vollständig entfallen.

Der erfindungsgemäße Mikrosensor ermöglicht Temperaturmessungen vom Tieftemperaturbereich bis zum Schmelz- bzw. Graphitisierungspunkt des verwendeten Halbleitersubstrates. Druckmessungen mit hoher Genauigkeit sind von 0 Pa bis zu mehreren GPa ohne weiteres möglich. Bei der Druckmessung ist die obere Grenze erst erreicht, wenn irreversible plastische Verformung bzw. Phasenumwandlung des Halbleitermaterials einsetzt.

Da der Druck- und Temperatursensor gemäß der Erfindung nur aus wenigen mikroelektronischen Bauelementen besteht, ist er mit extrem geringem Aufwand und zu entsprechend geringen Kosten herstellbar. Die für den Meßvorgang benötigte Auswerte-Elektronik kann auf einfache Mittel zur Messung des Widerstandes beschränkt werden. Geeignete Meßgeräte bzw. Baugruppen sind im Handel erhältlich.

Der erfindungsgemäße Mikrosensor kann als extrem robustes und unempfindliches Sensorelement ausgebildet sein, da auf der Oberfläche des Halbleitersubstrates keinerlei Bauelemente benötigt werden. Entsprechend ergibt sich die Möglichkeit, einen Temperatur- und Druckprüfkörper aus Halbleitermaterial herzustellen, der ohne ein zusätzliches Gehäuse auskommt. Dadurch ergibt sich eine problemlos handhabbare Meßvorrichtung, der, auch aufgrund der Miniaturisierbarkeit, ein großes Anwendungsspektrum offensteht.

Zweckmäßigerweise werden bei dem Mikrosensor gemäß der Erfindung die elektrisch leitenden Schichten durch Bereiche hoher Dotierstoff-Konzentration gebildet, während im Zwischenraum zwischen den in unterschiedlicher Tiefe vergrabenen Schichten eine geringere oder sogar verschwindende DotierstoffKonzentration vorliegt. Denkbar ist es auch, den Zwischenraum zwischen den elektrisch leitenden Schichten durch eine Zwischenschicht entgegengesetzten Leitungstyps zu erzeugen.

Die elektrisch leitenden Schichten werden also durch das Konzentrationsprofil des Dotierstoffes im Halbleitermaterial vorgegeben. Mit den üblichen halbleitertechnologischen Verfahren lassen sich im allgemeinen keine scharf begrenzten Bereiche hoher Dotierstoff-Konzentration herstellen. Eine vergrabene Dotierungsschicht besteht vielmehr aus einem Dotierstoffmaximum in einer bestimmten, vorgegebenen Tiefe unterhalb der Halbleiteroberfläche mit daran angrenzenden Bereichen, in denen die Dotierstoffkonzentration kontinuierlich abnimmt. Es ergibt sich so im Bereich der maximalen Dotierstoffkonzentration eine Schicht mit hoher elektrischer Leitfähigkeit, die von einem hochohmigen "Halo" umgeben ist. Dies kann vorteilhafterweise bei dem erfindungsgemäßen Sensor ausgenutzt werden, indem die elektrisch leitenden Schichten derart in unterschiedlichen Tiefen angeordnet werden, daß sich deren jeweilige Halos überlappen, und auf diese Weise eine hochohmige Widerstandsschicht zwischen den unterschiedlichen elektrisch leitenden Schichten bilden. Die Piezoresistivität dieser intermediären Schicht kann dann erfindungsgemäß zur Druck- bzw. Kraftmessung genutzt werden.

Experimente mit Prototypen des erfindungsgemäßen Mikrosensors haben gezeigt, daß sich vorteilhafte Eigenschaften erzielen lassen, wenn sich die elektrisch leitenden Schichten in einer Tiefe von 0,5 bis 5 Mikrometer unter der Halbleiteroberfläche befinden und wenn der Abstand zwischen den elektrisch leitenden Schichten 0,1 bis 1 Mikrometer beträgt. Vorteilhafterweise läßt sich eine derartige Anordnung problemlos mit den gängigen halbleitertechnologischen Herstellungsverfahren erzeugen. In der angegebenen Tiefe sind die integrierten Elemente ausreichend mechanisch geschützt, was aufgabengemäß Voraussetzung für eine robuste und unempfindliche Meßvorrichtung ist. Mit den derart oberflächennah vergrabenen Schichten läßt sich der obengenannte große Druckmeßbereich von 0 Pa bis zu mehreren GPa realisieren. Optimale Ergebnisse wurden erzielt mit zwei in einer Tiefe von 0,8 bzw. 1,5 Mikrometer vergrabenen Schichten. Das Dotierungsprofil der Schichten wurde dabei so gewählt, daß der effektive, hochohmige Bereich zwischen den Schichten eine Dicke von etwa 500 Nanometern hatte.

Zweckmäßig ist es des weiteren, den Mikrosensor mit einer zusätzlichen vergrabenen Widerstandsschicht mit wenigsten zwei elektrischen Kontakten auszustatten. Über die zwei Kontakte kann der Widerstandsschicht ein Heizstrom aufgeprägt werden, mit dem der erfindungsgemäße Sensor temperiert werden kann. Dazu ist es wichtig, die Widerstandsschicht von den anderen, oben beschriebenen Schichten elektrisch aber nicht thermisch zu isolieren. Es kann z. B. für Kalibrierungszwecke nützlich sein, die Temperatur des Sensors auf einen bestimmten, vorgebbaren Wert einregefn zu können. Die integrierte Heizung ist aber insbesondere wichtig für die weiter unten diskutierte Anwendung des erfindungsgemäßen Mikrosensors zur Messung der Wärmekapazität und Wärmeleitfähigkeit.

Besonders vorteilhaft ist es, als Halbleitermaterial für den erfindungsgemäßen Mikrosensor einkristallinen Diamant zu verwenden. Im Sinne der Erfindung ist insbesondere die große Härte des Diamanten optimal für einen Druck- bzw. Kraftsensor geeignet. Dies ist insbesondere für Hochdruck-Anwendungen wichtig, da, wie oben erwähnt, die Obergrenze des Druckmeßbereiches erst erreicht ist, wenn plastische Verformung oder Phasenumwandlung des verwendeten Halbleitermaterials einsetzt. Erst durch die Verwendung von Diamant wird es möglich, in Druckbereiche von einigen GPa und darüber vorzustoßen, die den vorbekannten Drucksensoren mit Durchbiegemembranen gänzlich unzugänglich sind. Für die Verwendung zur Temperaturmessung ist die hervorragende Wärmeleitfähigkeit von Diamant besonders vorteilhaft, da somit der Meßwert durch die thermischen Eigenschaften der Meßvorrichtung nur minimal beeinflußt wird.

Die für den erfindungsgemäßen Mikrosensor erforderlichen elektronischen Eigenschaften hat ein sogenannter Typ Ila Diamant. Es handelt sich hierbei um reinen, nicht verunreinigten und perfekt kristallisierten Diamant, der intrinsisch halbleitend ist. Bei der Auswahl eines für den erfindungsgemäßen Mikrosensor geeigneten synthetischen oder natürlichen Steines sollte mittels Photolumineszenz geprüft werden, daß die Stickstoff-Konzentration deutlich unter 10¹⁸ pro cm³ liegt. Prinzipiell eignen sich auch I a, I b oder II b Diamanten, allerdings sollte auf diese für die elektrisch leitenden Schichten etwa mittels CVD-Verfahren eine II a-Schicht aufgebracht werden. Besonders vorteilhaft ist die optische Transparenz von Diamant, da es dadurch ermöglicht wird, den erfindungsgemäßen Sensor zur Druck- und Temperaturmessung einzusetzen, während das untersuchte Objekt gleichzeitig optisch spektroskopiert werden kann. Vorteilhafte Eigenschaften hat superharter Diamant des weiteren für die unten beschriebene Anwendung zur Härtemessung. Es kann gegebenenfalls sinnvoll sein, je nach Anwendungsfall auf das Diamantmaterial zugunsten von preiswerteren Alternativen zu verzichten. In Frage kommen hierbei Si, SiC, BN oder GaN. Diese Materialien sind jedoch, was sowohl die mechanischen als auch die thermischen Eigenschaften angeht, dem Diamant weit unterlegen.

Eine weitere vorteilhafte Ausgestaltung des erfindungsgemäßen Mikrosensors besteht darin, daß die elektrisch leitenden Schichten eine laterale, vorzugsweise streifenförmige Strukturierung aufweisen. Durch die laterale Strukturierung wird der sensitive Bereich auf der Halbleiteroberfläche definiert. Dies ist insbesondere dann wichtig, wenn der Mikrosensor für eine ortsaufgelöste Temperatur- und Druckmessung eingesetzt werden soll. Besonders vorteilhaft ist eine streifenförmige Strukturierung, bei der die Streifen eine Breite von ca. 100 Mikrometern haben. Derartige Streifen lassen sich mit geringstem technologischen Aufwand herstellen. Wenn sich dabei die in unterschiedlicher Tiefe parallel zur Halbleiteroberfläche verlaufenden elektrisch leitenden Streifen zumindest teilweise überlappen oder überkreuzen, sind die sensitiven Zonen durch die Kreuzungspunkte bzw. die Überlappungsbereiche der Streifen genau definiert. Der aktive Bereich auf der Halbleiteroberfläche kann dabei deutlich kleiner als 1 mm² sein. Eine entsprechend hoch ortsaufgelöste Druck- und Temperaturmessung läßt sich mit dem Sensor durchführen.

Wenn mehrere sich kreuzende Streifen bei dem erfindungsgemäßen Mikrosensor zu einem Sensorarray angeordnet sind, läßt sich eine parallele Messung einer Temperatur- oder Kräfteverteilung an der Oberfläche eines untersuchten Objektes mit einer Ortsauflösung im Submillimeterbereich durchführen.

Der Mikrosensor gemäß der Erfindung kann als Halbleiter-Prüfkörper mit einer Spitze oder Kante ausgebildet sein. Wenn dabei die empfindliche Zone des Sensors im Bereich der Spitze bzw. der Kante liegt, wird eine gezielte, punktuelle Druck-, Kraft,- und Temperaturmessung an einer Festkörperoberfläche ermöglicht. Diese Formgestaltung ist insbesondere wichtig für die weiter unten dargestellte Verwendung des Mikrosensors zur Härtemessung. Das verwendete Halbleitermaterial ist prinzipiell beliebig formbar, so daß der Mikrosensor individuell an jede Meßaufgabe angepaßt werden kann.

Besonders vorteilhaft ist es jedoch, wenn der Prüfkörper eine kegelartige oder pyramidale Form hat. Auf diese Weise läßt sich sicherstellen, daß der Prüfkörper an einem genau definierten Punkt Kontakt mit der untersuchten Festkörperoberfläche hat. Über die breite Basis des kegelförmigen oder pyramidalen Prüfkörpers können die auf die Spitze einwirkenden Kräfte abgestützt werden. Dies ist für Hochdruckanwendungen von entscheidender Bedeutung. Der Kegelöffnungswinkel des Prüfkörpers kann je nach Anforderung und Meßbereich gewählt werden. Bei der Druckmessung kann es zweckmäßig sein, den empfindlichen Bereich des Sensors auf der abgestumpften Spitze eines Kegels anzuordnen, da auf diese Weise die mit Druck beaufschlagte Fläche des Sensors genau definiert ist.

Zur Kontaktierung des Mikrosensors gemäß der Erfindung verwendet man zweckmäßigerweise metallische Drähte die mittels Graphitkleber mit den Kontakten der elektrisch leitenden Schichten verbunden sind. Das Meßprinzip des Sensors beruht, wie oben beschrieben, auf der Druck- bzw. Temperaturabhängigkeit des Stromflusses durch die elektrisch leitenden Schichten. Hierzu erfolgt die Kontaktierung des Sensors am besten durch Tantaldrähte, da sich diese gut mit Graphitkleber auf der Halbleiteroberfläche befestigen lassen. Vorteilhaft ist dabei, daß die Wärmeausdehnungskoeffizienten der Drähte und des Klebers aufeinander abgestimmt werden können, so daß es bei einer Erwärmung des Sensors nicht unerwünschterweise zu einer Ablösung der Versorgungsdrähte kommen kann. Insbesondere bei der Verwendung von Diamant als Substrat für den Mikrosensor hat sich Graphitkleber für die Kontaktierung bewährt. Im Bereich der Kontakte der elektrisch leitenden Schichten ist das Diamantmaterial, wie weiter unten beschrieben wird, graphitisiert, so daß mit dem Graphitkleber ein ohmscher Kontakt mit guter Leitfähigkeit realisiert werden kann.

Bei einem Verfahren zur Herstellung eines Mikrosensors gemäß der Erfindung werden zweckmäßigerweise die vergrabenen, elektrisch leitenden Schichten mittels Ionenimplantation erzeugt.

Die Technik der Ionenimplantation ist für die Herstellung von vergrabenen Dotierungsschichten geradezu prädestiniert. Bei der Dotierung mittels lonenimplantation liegt das Maximum der Dotierstoffkonzentration niemals an der Oberfläche des Halbleitersubstrates sondern bis zu einigen Mikrometern darunter. Die Tiefe des Dotierungsmaximums kann dabei durch die Vorgabe der Ionenenergie frei gewählt werden. Es ergeben sich dabei Dotierungsprofile, bei denen oberhalb und unterhalb des Dotierungsmaximums die Dotierstoffkonzentration kontinuierlich abnimmt. Es ergeben sich auf diese Weise automatisch die oben beschriebenen Bereiche geringer Leitfähigkeit ("Halos"), deren Piezoresistivität bei der Druckmessung ausgenutzt wird. Weitere Vorteile hat die Ionenimplantation bei der Vorgabe der Dotierungsdosis, da der Ionenstrom während der Dotierung gesteuert und überwacht werden kann.

Ein alternatives Verfahren zur Herstellung eines erfindungsgemäßen Mikrosensors besteht darin, daß die elektrisch leitenden Schichten durch Deposition aus der Gasphase erzeugt werden, wobei das verwendete Gas einen Dotierstoff in geeigneter Konzentration enthält.

Bei diesem Verfahren wird die Schichtenfolge durch sequentielle epitaktische Ablagerung von Halbleitermaterial auf der Substratoberfläche hergestellt. Das Substrat wird dabei einem Gas ausgesetzt, aus dem pyrolytisch der Stoff des Substratmaterials ausgeschieden wird. Durch eine Abfolge von Depositonsschritten mit wechselnder Dotierstoffkonzentration im Reaktionsgas können so die gewünschten, elektrisch leitenden Schichten erzeugt werden. Dieses sogenannte CVD-Verfahren hat jedoch gegenüber der zuvor beschriebenen Ionenimplantationstechnik einige Nachteile. Die Steuerung des Verfahrens ist aufwendig und das Schichtenwachstum nur schwer zu kontrollieren. Des weiteren sind die im Reaktionsgas eingesetzten Chemikalien oft toxisch, woraus gegebenenfalls eine nicht unerhebliche Entsorgungsproblematik resultiert.

Bei der Herstellung eines erfindungsgemäßen Mikrosensors aus Diamantmaterial werden zweckmäßigerweise zunächst die elektrisch leitenden Schichten in dem Diamantsubstrat bei Temperaturen von 800°C bis 1600°C mittels Ionenimplantation erzeugt, wonach die Herstellung der elektrischen Kontakte mittels Hochdosis-Implantation bei Raumtemperatur erfolgt.

Durch die Ionenimplantation bei hoher Temperatur wird erreicht, daß das Diamantmaterial oberhalb der dotierten Schichten beim Implantationsvorgang intakt und defektarm bleibt. Bei Raumtemperatur hingegen bewirkt die Implantation oberhalb einer gewissen Dosis eine Graphitisierung der Diamantoberfläche. Bei dem beschriebenen Herstellungsverfahren ist also die Reihenfolge der Implantationsschritte entscheidend. Erst nach der Erzeugung der elektrisch leitenden Schichten können die Kontakte bei Raumtemperatur erzeugt werden, da durch das entstehende Graphit gute ohmsche Kontakte gebildet werden. Würde die Hochtemperaturimplantation erst nach der Herstellung der Kontakte erfolgen, so würden die defekt reichen, graphitisierten Bereich teilweise ausheilen, was zu einer deutlichen Verschlechterung der elektrischen Eigenschaften der Kontakte führen würde. Experimente mit Prototypen von erfindungsgemäßen Diamantsensoren haben ergeben, daß bei der Implantation von Bor-Ionen zur Erzeugung von p-leitenden Schichten gute Ergebnisse erzielt werden, wenn zunächst die erste Schicht bei 1100°C mit einer Ionenenergie von 1 MeV und mit einer Dosis von 8 mal 10¹⁶ Ionen pro cm² implantiert wird. Danach folgt die Implantation der zweiten Schicht mit einer Energie von 2,5 MeV bei gleicher Temperatur und Dosis. Zuletzt erfolgt die Implantation der Kontakte bei Raumtemperatur jeweils mit Energien von 1 und 2,5 MeV; die Dosis ist dabei 10¹⁷ Ionen pro cm².

Bei einem Verfahren zur Herstellung eines erfindungsgemäßen Mikrosensors wird zweckmäßigerweise die laterale Strukturierung der elektrisch leitenden Schichten mittels fokussierter Ionenimplantation erzeugt. Dabei kommen grundsätzlich zwei unterschiedliche Ionenimplantationstechniken in Frage:
Einerseits ist es möglich, die lateral strukturierte Dotierungsschicht durch Ablenkung des lonenstrahls auf die Halbleiteroberfläche zu schreiben. Alternativ kann mittels einer geeigneten Ionenoptik, z. B. in Form von magnetischen Linsen, eine entsprechend strukturierte Maske auf das Halbleitersubstrat projiziert werden. Insbesondere wenn, wie oben beschrieben, der Mikrosensor als spitzer oder kegelartiger Prüfkörper ausgebildet ist, sind konventionelle, also nicht fokussierte Ionenimplantationstechniken ungeeignet, da die nötigen Lithographie- und Maskierungsschritte eine planare Halbleiteroberfläche voraussetzen. Am besten eignet sich für derart geformte Prüfkörper ein ionenoptisch abbildendes System mit großer Tiefenschärfe. Besonders geeignet ist beispielsweise eine Vorrichtung gemäß der DE 196 33 320. Das ionenoptische Herstellungsverfahren eignet sich vorteilhafterweise auch für die Herstellung von Mikrosensoren ausgehend von nicht planarem Halbleitersubstrat, in welche nur eine vergrabene, elektrisch leitende Schicht, etwa zur Temperaturmessung, integriert ist. Auf Diamantsubstrat lassen sich damit beispielsweise zur Erzeugung von p-halbleitenden Streifen Bor-Ionen implantieren. Ebenfalls möglich ist die Implantation von Lithium oder Schwefel zur Erzeugung einer n-Dotierung.
Mikrosensoren aus Halbleitermaterial mit integrierten piezoresistiven Elementen eignen sich in besonderer Weise zur Härtemessung. Bei der Härtemessung wird der Widerstand einer Werkstoffoberfläche gegen die plastische Verformung durch einen genormten Eindringkörper (Indenter) ermittelt. Üblich ist es dabei, den bleibenden Eindruck des Indenters in der Materialoberfläche zu vermessen. Es existieren eine Reihe unterschiedlicher Normen für die Härtemessung: Für die Brinellhärte, die Vickershärte und die Knoophärte wird die Oberfläche des Indentereindrucks bestimmt, während für die Rockwellhärte die Eindringtiefe entscheidend ist. Bei weiterentwickelten Härtemeßverfahren werden zusätzlich zu den plastischen auch die elastischen Materialeigenschaften berücksichtigt.

Für die Härtemessung eignet sich ein als spitzer Halbleiter-Prüfkörper ausgebildeter Mikrosensor, der als Meßindenter dient, aus dessen Eindringverhalten in eine Festkörperoberfläche die Materialhärte bestimmt wird. Besonders vorteilhaft ist dabei, wenn der Meßindenter aus superhartem Diamant besteht. Das Eindringverhalten eines solchen Meßindenters kann mittels der in die Spitze des Indenters integrierten Sensorelemente untersucht werden. Zwei prinzipiell unterschiedliche Vorgehensweisen sind dabei denkbar: Zum einen ist es möglich, die Eindringtiefe des Meßindenters in die Werkstoffoberfläche vorzugeben und die bei dieser Eindringtiefe an der Spitze des Indenters angreifende Kraft zu ermitteln. Diese Kraft wird zu der Eindringtiefe in Beziehung gesetzt, um daraus die Härte zu bestimmen. Das Verfahren kann insbesondere zur Messung der Rockwellhärte eingesetzt werden. Zum anderen kann der Meßindenter mit konstanter Kraft in die Materialoberfläche getrieben werden, wobei dann zur Ermittlung der Eindringtiefe der Druck an der Indenterspitze gemessen wird. Aus dem Druck und der Vorschubkraft läßt sich so die Auflagefläche des Indenters bestimmen; daraus ergibt sich unmittelbar die Eindringtiefe, da die geometrische Form der Prüfspitze bekannt ist. Dieses Verfahren entspricht der Härtemessung nach Brinell, Vickers oder Knoop.

Der erfindungsgemäße Mikrosensor ist insbesondere aufgrund seines Meßbereiches gut für die Härtemessung zu gebrauchen. Bei einer typischen Eindringtiefe von 10 Mikrometern z. B. in die Oberfläche eines Stahlwerkstücks entstehen an der Indenterspitze Drücke im Bereich von etwa 1 GPa.

Der Meßindenter eignet sich des weiteren auch für weiterentwickelte Verfahren zur Härtemessung. So ist es auf einfach Weise möglich, eine dynamische Messung durchzuführen, bei der der Druck an der Indenterspitze als Funktion der Eindringtiefe während des Eindringvorganges kontinuierlich aufgenommen wird. Daraus ergeben sich Information über sowohl plastische als auch elastische Materialeigenschaften; darüber hinaus kann so ein Tiefenprofil der Materialhärte gewonnen werden.

Ein als spitzer Prüfkörper ausgebildeter Mikrosensor gemäß der Erfindung kann zur Messung von Wärmekapazität und Wärmeleitfähigkeit verwendet werden, wobei mit dem Halbleiter-Prüfkörper Temperaturmessungen an einer Materialoberfläche durchgeführt werden.

Zur Bestimmung der Wärmekapazität und Wärmeleitfähigkeit wird der Prüfkörper auf die Oberfläche eines Objektes aufgesetzt. Danach wird der Prüfkörper durch einen integrierten Widerstandheizstreifen erwärmt, während gleichzeitig die Temperatur an der Prüfspitze gemessen wird. Der Heizstreifen ist, wie oben beschrieben, von den elektrisch leitenden Schichten, die für die Temperaturmessung verwendet werden, elektrisch aber nicht thermisch isoliert. Die über den Heizstreifen eingetragene Wärmeenergie wird durch den gut wärmeleitenden Prüfkörper auf das Meßobjekt übertragen. Dessen Wärmekapazität und Wärmeleitfähigkeit kann aus der Zeitabhängigkeit der Temperaturänderung ermittelt werden. Die Wärmeleitfähigkeit läßt sich im wesentlichen aus der Temperaturänderungsrate bestimmen, während auf die Wärmekapazität des Meßobjektes aus der Gleichgewichtstemperatur geschlossen werden kann. Für ein derartiges Meßverfahren muß die Wärmekapazität und Wärmeleitfähigkeit des Prüfkörpers genau bekannt sein. Besonders geeignet ist auch hier wieder Diamantmaterial wegen seiner hohen Wärmeleitfähigkeit. Durch den zu einer Spitze geformten Prüfkörper werden hoch ortsaufgelöste Mikrowärmeleitfähigkeits- und Mikrowärmekapazitätsmessungen ermöglicht.

Für einen erfindungsgemäßen Mikrosensor, der als Halbleiter-Prüfkörper mit einer scharfen Kante ausgebildet ist, besteht eine Verwendungsmöglichkeit zur spanenden Materialbearbeitung, wobei der Halbleiter-Prüfkörper als spanabhebendes Werkzeug eingesetzt wird.

Für die Materialbearbeitung ist es zweckmäßig, den Halbleiter-Prüfkörper aus hartem Material, wie etwa Diamant herzustellen. Die Kante des Prüfkörpers bildet die Schneide des spanabhebenden Werkzeugs. Damit wird ermöglicht, die an der Schneidfläche wirksamen Kräfte während der Materialbearbeitung unmittelbar zu bestimmen. Dies kann einerseits dafür genutzt werden, das Verschleißverhalten eines Schneidwerkzeuges zu untersuchen, um mittels der so gewonnenen Kenntnisse dessen Formgebung zu optimieren. Des weiteren kann die Messung der an der Schnittfläche angreifenden Kräfte dazu genutzt werden, die Bearbeitungsgeschwindigkeit und die Anpreßkraft des Werkzeuges an das bearbeitete Material optimal anzupassen. Es lassen sich damit spanabhebende Werkzeugmaschinen realisieren, die sich automatisch auf die Eigenschaften des bearbeiteten Werkstücks einstellen, wodurch die benötigte Bearbeitungszeit minimiert werden kann.

Vorteilhafterweise kann ein Halbleitermikrosensor mit wenigstens einer vergrabenen, elektrisch leitenden Schicht als Tastspitze für ein Rasterkraftmikroskop eingesetzt werden. Mit einer solchen Tastspitze ist es möglich, zusätzlich zur mikroskopischen Untersuchung der Oberflächenstruktur eines Objektes eine hoch ortsaufgelöste Temperaturmessung durchzuführen.

Ausführungsbeispiele des erfindungsgemäßen Mikrosensors werden im folgenden anhand der Zeichnungen erläutert. Es zeigen:
- Fig. 1:: Halbleitersubstrat im Querschnitt mit elektrisch leitenden Streifen;
- Fig. 2:: elektrisch leitende Streifen in Draufsicht;
- Fig. 3:: Querschnitt durch einen Prüfkörper mit erfindungsgemäßem Mikrosensor;
- Fig. 4:: spanabhebendes Werkzeug mit Mikrosensor;
- Fig. 5:: Beschaltung eines Mikrosensors zur kombinierten Druck- und Temperaturmessung;
- Fig. 6:: Beschaltung des Mikrosensors zur Wärmeleitfähigkeits- und Wärmekapazitätsmessung;
- Fig. 7:: Diamantstempel mit Mikrosensor für Hochdruckexperimente.

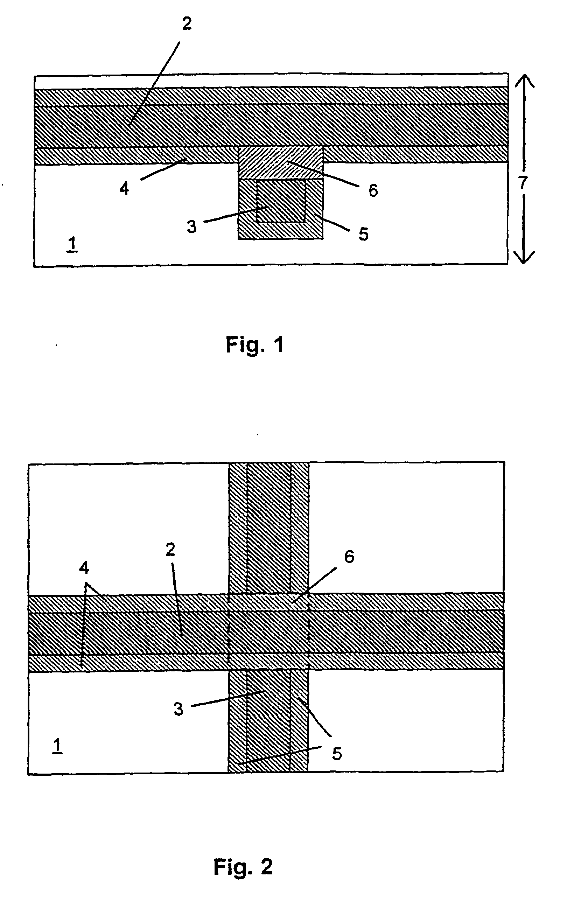

Die Figur 1 zeigt ein Halbleitersubstrat 1 im Querschnitt, in das zwei vergrabene elektrisch leitende Streifen 2 und 3 integriert sind. Diese bestehen jeweils aus einem zentralen Bereich mit hoher Dotierstoffkonzentration und einem umgebenden, hoch ohmigen "Halo" 4 und 5 mit niedriger Dotierstoffkonzentration. Die Halos überlappen sich in einem Bereich 6, dessen Piezoresistivität erfindungsgemäß für die Druck- bzw. Kraftmessung verwendet wird. Die Dicke der in der Figur dargestellten Oberflächenschicht 7 beträgt etwa 2 Mikrometer. Der obere Streifen 2 befindet sich in einer Tiefe von etwa 0,8 Mikrometern unterhalb der Halbleiteroberfläche; der Streifen 3 befindet sich in einer Tiefe von etwa 1,5 Mikrometern, wobei der Abstand zwischen den hochdotierten Bereichen etwa 500 Nanometer beträgt. Dies ist gleichzeitig die Dicke der piezoresistiven Schicht. Die Figur 2 zeigt das Halbleitersubstrat 1 mit den beiden integrierten Streifen 2 und 3 in der Draufsicht. Es ist zu erkennen, daß sich die beiden Streifen 2, 3 kreuzen, wodurch der piezoresistive Meßbereich 6 definiert wird. Eine auf diesen Meßbereich einwirkende Kraft verursacht eine Änderung des Stromflusses vom Streifen 2 in den Streifen 3. Da die Meßfläche 6 genau bekannt ist bzw. der Sensor zuvor entsprechend kalibriert wurde, kann daraus der auf der Halbleiteroberfläche anstehende Druck bestimmt werden.

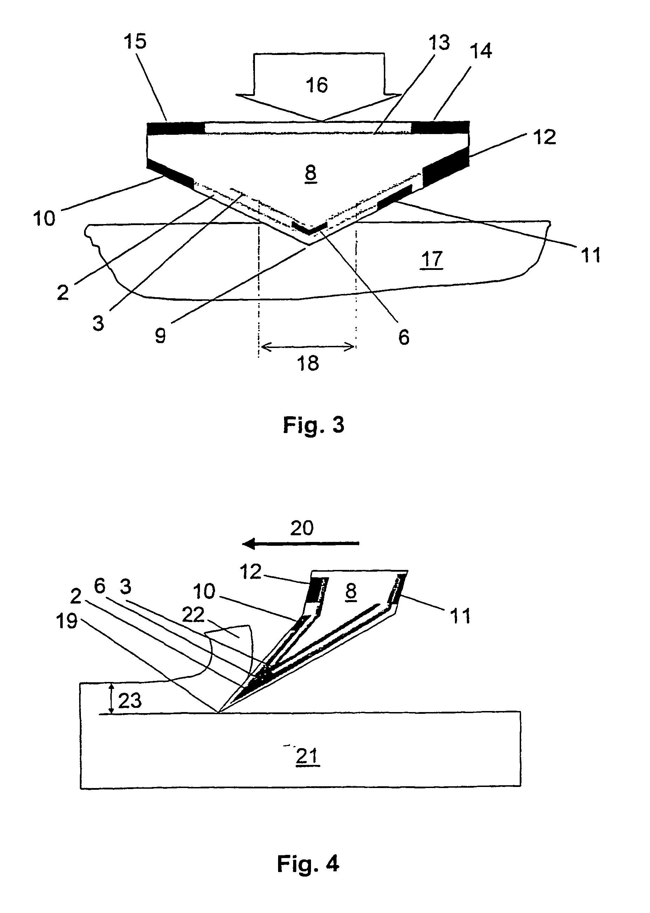

Die Figur 3 zeigt einen erfindungsgemäßen Mikrosensor, der als spitzer Kegel 8 ausgebildet ist, im Querschnitt. An der Oberfläche des Prüfkörpers 8 sind ein oberer und ein unterer elektrisch leitender Streifen 2 bzw. 3 integriert. An einer Spitze 9 des Prüfkörpers befindet sich der hochohmige piezoresistive Überlappungsbereich 6 der beiden Streifen 2 und 3, der für die Druck- bzw. Kraftmessung verwendet wird. Der obere Streifen 2 verfügt über zwei elektrische Kontakte 10 und 11. Über diese Kontakte kann zur Temperaturmessung der elektrische Widerstand des Streifens 2 gemessen werden. Der untere Streifen 3 verfügt über nur einen Kontakt 12. Beispielsweise die beiden Kontakte 11 und 12 können dazu genutzt werden, den Widerstand des piezoresistiven Bereiches zu ermitteln. Auf der Rückseite des Prüfkörpers 8 ist ein Widerstandsstreifen 13 mit zwei Kontakten 14 und 15 integriert. Über diese Kontakte kann dem Widerstandsstreifen 13 ein Heizstrom aufgeprägt werden, mit dem der Prüfkörper 8 temperiert werden kann. Dies ist, wie oben beschrieben, insbesondere für die Wärmeleitfähigkeits- und die Wärmekapazitätsmessung von Bedeutung. Die Figur zeigt die Verwendung des Mikrosensors als Meßindenter für die Härtemessung. Die Spitze 9 des Indenters wird durch eine Kraft 16, die auf die Rückseite des Prüfkörpers 8 einwirkt, in die Oberfläche eines Werkstücks 17 getrieben. Der mit dem piezoresistiven Element 6 registrierte Druck hängt von dem Durchmesser 18 der Kontaktfläche ab. Da die Geometrie des Prüfkörpers 8 bekannt ist, kann daraus auf die Eindringtiefe und damit auf die Materialhärte (z. B. nach Rockwell) zurückgeschlossen werden.

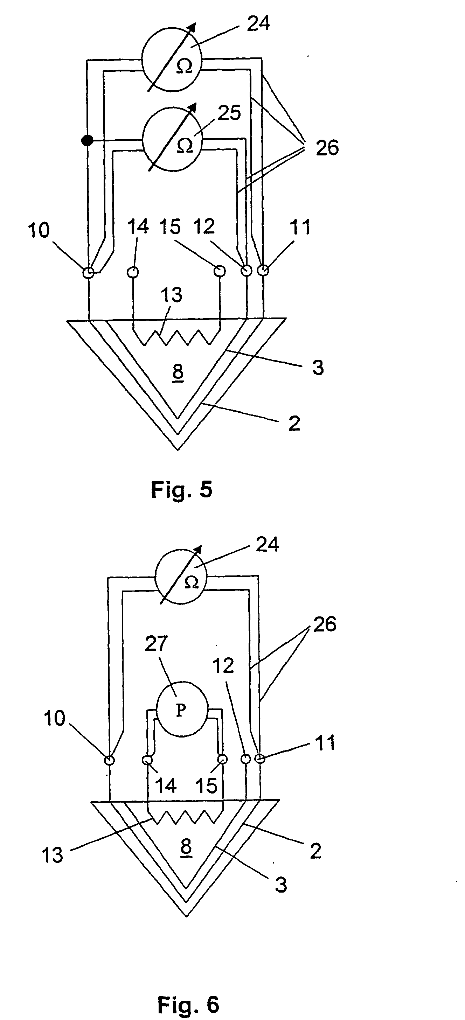

Die Figur 4 veranschaulicht die Verwendung des erfindungsgemäßen Mikrosensors als spanabhebendes Werkzeug. Der Prüfkörper 8 verfügt in diesem Fall über eine spitze Kante 19, die die Schneide des Werkzeugs bildet. Das Werkzeug wird in einer Arbeitsrichtung 20 vorgetrieben, wobei von einem Werkstück 21 ein Span 22 abgehoben wird. Die dabei an der Schneide 19 angreifenden Kräfte können durch das druckempfindliche Element 6 des Mikrosensors registriert werden. Diese hängen z. B. von der Schnittiefe 23 ab. Die Figur 5 zeigt die Beschaltung des Prüfkörpers 8 zur kombinierten Temperatur- und Druckmessung. Mittels eines Ohmmeters 24 wird der elektrische Widerstand zwischen den Kontakten 10 und 11 gemessen. Dies ist der elektrische Widerstand innerhalb einer elektrisch leitenden Schicht, der im wesentlichen temperaturabhängig ist und nur wenig vom Druck abhängt. Ein zweites Ohmmeter 25 hingegen mißt über die Kontakte 10 und 12 den elektrischen Widerstand zwischen zwei unterschiedlichen, in verschiedenen Tiefen vergrabenen elektrisch leitenden Schichten, der stark vom Druck an der Sensoroberfläche beeinflußt wird. Von jedem der Ohmmeter führen zu jedem Kontakt zwei Zuleitungen 26. Dadurch wird eine Vierpol-Widerstandsmessung ermöglicht, die eine vom Widerstand der Zuleitungen 26 unbeeinflußte Widerstandsmessung gewährleistet.

Die in der Figur 6 gezeigte Beschaltung des Sensors dient zur Messung der Wärmeleitfähigkeit und der Wärmekapazität. Wieder wird zwischen den Kontakten 10 und 11 mit dem Ohmmeter 24 die Temperatur bestimmt. Eine elektrische Stromquelle mit definierter Leistungsabgabe 27, die mit den Kontakten 14 und 15 verbunden ist, versorgt den Heizwiderstand 13 mit Strom. Wie oben beschrieben, kann damit die Erwärmung eines Objektes, das mit dem Prüfkörper in Kontakt steht, untersucht werden, wobei aus der Rate der Temperaturänderung und der erreichten Gleichgewichtstemperatur Wärmekapazität und Wärmeleitfähigkeit bestimmt werden.

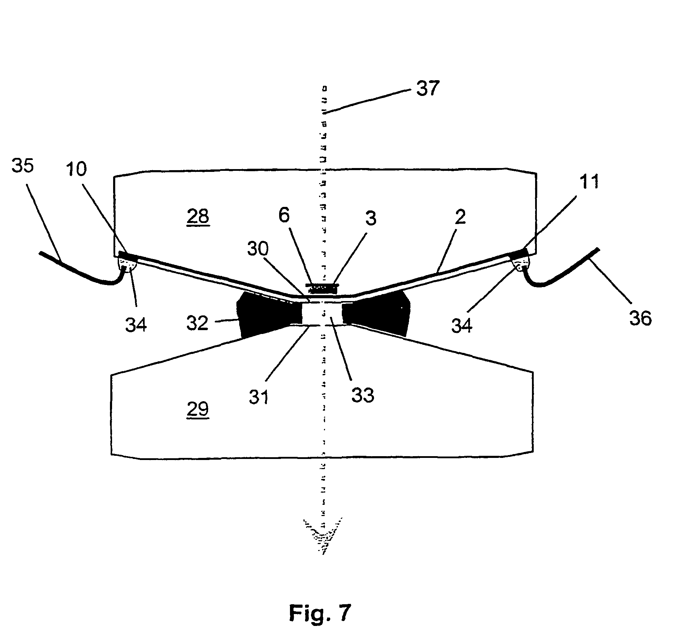

Die Figur 7 zeigt eine Meßanordnung für Hochdruckexperimente. Diese besteht aus zwei kegelförmigen Diamantstempeln 28 und 29 mit jeweils einer abgestumpften Spitze 30 bzw. 31. Durch eine ringförmige Rheniumdichtung 32 entsteht zwischen den Spitzen 30 und 31 der Diamantstempel 28 und 29 ein Probenraum 33. In diesem gegenüber der Umgebung abgedichteten Probenraum können durch Zusammenpressen der Diamantstempel 28 und 29 extreme Drücke bis weit in den GPa-Bereich erzeugt werden. Dabei wird der Dichtring 32 plastisch verformt, wobei eine formschlüssige Verbindung zwischen dem Dichtring 32 und den Spitzen 30 und 31 der Diamantstempel 28 und 29 gebildet wird. Die Messung des Drucks im Probenraum 33 erfolgt über den erfindungsgemäßen Mikrosensor, der in die Spitze 30 integriert ist. Die Abbildung zeigt den oberen elektrisch leitenden Streifen 2 mit den Kontakten 10 und 11. An diesen ist mit Graphitkleber 34 jeweils ein Tantaldraht 35 bzw. 36 befestigt. Senkrecht zu dem oberen Streifen 2 verläuft der untere Streifen 3, so daß der piezoresistive Überlappungsbereich der beiden Streifen 6 unmittelbar oberhalb des Probenraums 33 liegt. Die Diamantstempelzelle kann dafür genutzt werden, eine in dem Probenraum 33 befindliche Probe mittels optischer Spektroskopie zu untersuchen. Hierzu kann der Probenraum durch die optisch transparenten Diamantstempel mit einem Laserstrahl 37 durchstrahlt werden.

## Patentansprüche

1. Mikrosensor aus Halbleitermaterial, insbesondere zur Druck- und Temperaturmessung, mit integrierten piezoresistiven Elementen, **gekennzeichnet durch** wenigstens zwei in unterschiedlicher Tiefe unter der Halbleiteroberfläche vergrabene, einander kreuzende oder zumindest teilweise überlappende, elektrisch leitende Schichten (2, 3) mit jeweils mindestens einem elektrischen Kontakt (10, 11, 12).

2. Mikrosensor nach Anspruch 1, **dadurch gekennzeichnet, daß** die elektrisch leitenden Schichten durch Bereiche hoher Dotierstoff-Konzentration gebildet werden, während im Zwischenraum zwischen den in unterschiedlicher Tiefe vergrabenen Schichten eine geringere Dotierstoff-Konzentration vorliegt.

3. Mikrosensor nach Anspruch 1, **dadurch gekennzeichnet, daß** sich die elektrisch leitenden Schichten in einer Tiefe von 0,5 bis 5 Mikrometer unter der Halbleiteroberfläche befinden.

4. Mikrosensor nach Anspruch 1, **dadurch gekennzeichnet, daß** der Abstand zwischen zwei elektrisch leitenden Schichten 0,1 bis 1 Mikrometer beträgt.

5. Mikrosensor nach Anspruch 1, **gekennzeichnet durch** eine zusätzlichevergrabene Widerstandsschicht (13) mit wenigstens zwei elektrischen Kontakten (14, 15).

6. Mikrosensor nach Anspruch 1, **dadurch gekennzeichnet, daß** das Halbleitermaterial einkristalliner Diamant ist.

7. Mikrosensor nach Anspruch 1, **dadurch gekennzeichnet, daß** die elektrisch leitenden Schichten eine laterale, vorzugsweise streifenförmige Strukturierung aufweisen.

8. Mikrosensor nach Anspruch 7, **dadurch gekennzeichnet, daß** sich die elektrisch leitenden Streifen (2, 3), die in unterschiedlicher Tiefe parallel zur Halbleiteroberfläche verlaufen, zumindest teilweise überlappen oder überkreuzen.

9. Mikrosensor nach Anspruch 8, **dadurch gekennzeichnet, daß** mehrere sich kreuzende Streifen zu einem Sensorarray angeordnet sind.

10. Mikrosensor nach Anspruch 1, **dadurch gekennzeichnet, daß** der Mikrosensor als Halbleiter-Prüfkörper (8) mit einer Spitze oder Kante ausgebildet ist.

11. Mikrosensor nach Anspruch 10, **dadurch gekennzeichnet, daß** der Prüfkörper (8) eine kegelartige oder pyramidale Form hat.

12. Mikrosensor nach Anspruch 1, **gekennzeichnet durch** metallische Drähte (35, 36), vorzugsweise aus Tantal, die mittels eines leitfähigen Klebers, vorzugsweise Graphitkleber mit den Kontakten (10, 11, 12) der elektrisch leitenden Schichten (2, 3) verbunden sind.

13. Verfahren zur Herstellung eines Mikrosensors nach Anspruch 1, bei welchem die vergrabenen, elektrisch leitenden Schichten mittels Ionenimplantation erzeugt werden.

14. Verfahren zur Herstellung eines Mikrosensors nach Anspruch 1, bei welchem die elektrisch leitenden Schichten durch Deposition aus der Gasphase erzeugt werden, wobei das verwendete Gas einen Dotierstoff in geeigneter Konzentration enthält.

15. Verfahren zur Herstellung eines Mikrosensors nach Anspruch 6, bei welchem zunächst die elektrisch leitenden Schichten in dem Diamantsubstrat bei Temperaturen von 800°C bis 1600°C mittels Ionenimplantation erzeugt werden, wonach die Herstellung der elektrischen Kontakte mittels Hochdosis-Implantation bei Raumtemperatur erfolgt.

16. Verfahren zur Herstellung eines Mikrosensors aus Halbleitermaterial, nach einem der Ansprüche 7 bis 11, bei welchem die lateral strukturierte Dotierung einer elektrisch leitenden Schicht mittels fokussierter Ionenimplantation erzeugt wird.

17. Verwendung eines Mikrosensors nach Anspruch 1 zur Härtemessung.

18. Verwendung eines Mikrosensors nach Anspruch 10 zur Härtemessung, wobei der Halbleiter-Prüfkörper als Meßindenter dient, aus dessen Eindringverhalten in eine Festkörperoberfläche die Materialhärte bestimmt wird.

19. Verwendung eines Mikrosensors nach Anspruch 10 zur Messung von Wärmekapazität und Wärmeleitfähigkeit, wobei mit dem Halbleiter-Prüfkörper Temperaturmessungen an einer Materialoberfläche durchgeführt werden.

20. Verwendung eines Mikrosensors nach Anspruch 10 zur spanenden Materialbearbeitung, wobei der Halbleiter-Prüfkörper als spanabhebendes Werkzeug ausgebildet ist.

21. Verwendung eines Mikrosensors nach Anspruch 1 als Testspitze für ein Rasterkraftmikroskop.

## Claims

1. A microsensor of semiconductor material, in particular for pressure and temperature measurement, with integrated piezoresistive elements, **characterised by** at least two mutually crossing or at least partially overlapping, electrically conductive layers (2, 3) each having at least one respective electrical contact (10, 11, 12), the layers being buried at differing depths under the semiconductor surface.

2. A microsensor according to claim 1 **characterised in that** the electrically conductive layers are formed by regions of a high dopant concentration while a lower dopant concentration prevails in the intermediate space between the layers buried at differing depths.

3. A microsensor according to claim 1 **characterised in that** the electrically conductive layers are at a depth of 0.5 to 5 micrometers under the semiconductor surface.

4. A microsensor according to claim 1 **characterised in that** the spacing between two electrically conductive layers is 0.1 to 1 micrometer.

5. A microsensor according to claim 1 **characterised by** an additional buried resistance layer (13) with at least two electrical contacts (14, 15).

6. A microsensor according to claim 1 **characterised in that** the semiconductor material is single-crystal diamond.

7. A microsensor according to claim 1 **characterised in that** the electrically conductive layers have a lateral, preferably strip-shaped structuring.

8. A microsensor according to claim 7 **characterised in that** the electrically conductive layers (2, 3) which extend at differing depths parallel to the semiconductor surface at least partially overlap or cross each other.

9. A microsensor according to claim 8 **characterised in that** a plurality of mutually crossing strips are arranged to provide a sensor array.

10. A microsensor according to claim 1 **characterised in that** the microsensor is in the form of a semiconductor test body (8) with a tip or an edge.

11. A microsensor according to claim 10 **characterised in that** the test body (8) is of a conical or pyramidal shape.

12. A microsensor according to claim 1 **characterised by** metallic wires (35, 36), preferably of tantalum, which are connected by means of a conductive adhesive, preferably graphite adhesive, to the contacts (10, 11, 12) of the electrically conductive layers (2, 3).

13. A process for the production of a microsensor according to claim 1 wherein the buried, electrically conductive layers are produced by means of ion implantation.

14. A process for the production of a microsensor according to claim 1 wherein the electrically conductive layers are produced by deposition from the gaseous phase, wherein the gas used contains a dopant in a suitable concentration.

15. A process for the production of a microsensor according to claim 6 wherein firstly the electrically conductive layers are produced in the diamond substrate at temperatures of 800°C to 1600°C by means of ion implantation, whereupon production of the electrical contacts is effected by means of high-dose implantation at ambient temperature.

16. A process for the production of a microsensor of semiconductor material according to one of claims 7 to 11 wherein the laterally structured doping of an electrically conductive layer is produced by means of focused ion implantation.

17. Use of a microsensor according to claim 1 for hardness measurement.

18. Use of a microsensor according to claim 10, for hardness measurement, wherein the semiconductor test body serves as a measurement indenter, the penetration characteristics of which into a solid body surface provide for determining the hardness of the material.

19. Use of a microsensor according to claim 10 for the measurement of thermal capacity and thermal conductivity, wherein temperature measurements are carried out at a material surface with the semiconductor test body.

20. Use of a microsensor according to claim 10 for cutting material machining, wherein the semiconductor test body is in the form of a cutting tool.

21. Use of a microsensor according to claim 1 as a test tip for a scanning force microscope.

## Revendications

1. Microdétecteur en un matériau semiconducteur, en particulier pour la mesure de la pression et de la température, avec des éléments piézorésistifs intégrés, **caractérisé par** au moins deux couches électriquement conductrices (2, 3) noyées à des profondeurs différentes sous la surface semiconductrice, se croisant ou se chevauchant au moins partiellement, avec à chaque fois au moins un contact électrique (10, 11, 12).

2. Microdétecteur selon la revendication 1, **caractérisé en ce que** les couches électriquement conductrices sont formées par des zones d'une concentration d'agent de dopage élevée tandis que dans l'espace intermédiaire entre les couches noyées à des profondeurs différentes, il y a une concentration d'agent de dopage plus faible.

3. Microdétecteur selon la revendication 1, **caractérisé en ce que** les couches électriquement conductrices se trouvent à une profondeur de 0,5 à 5 micromètres sous la surface semiconductrice.

4. Microdétecteur selon la revendication 1, **caractérisé en ce que** l'écart entre deux couches électriquement conductrices est de 0,1 à 1 micromètre.

5. Microdétecteur selon la revendication 1, **caractérisé par** une couche de résistance additionnelle noyée (13) avec au moins deux contacts électriques (14, 15).

6. Microdétecteur selon la revendication 1, **caractérisé en ce que** le matériau semiconducteur est un diamant monocristallin.

7. Microdétecteur selon la revendication 1, **caractérisé en ce que** les couches électriquement conductrices présentent une structuration latérale, de préférence en forme de bande.

8. Microdétecteur selon la revendication 7, **caractérisé en ce que** les couches électriquement conductrices (2, 3), qui s'étendent à une profondeur différente parallèlement à la surface semiconductrice, se chevauchent ou se croisent au moins partiellement.

9. Microdétecteur selon la revendication 8, **caractérisé en ce que** plusieurs bandes qui se croisent sont agencées en un groupement de détecteurs.

10. Microdétecteur selon la revendication 1, **caractérisé en ce que** le microdétecteur est réalisé comme échantillon semiconducteur (8) avec une pointe ou arête.

11. Microdétecteur selon la revendication 10, **caractérisé en ce que** l'échantillon (8) possède une forme conique ou pyramidale.

12. Microdétecteur selon la revendication 1, **caractérisé par** des fils métalliques (35,36), de préférence en tantale, qui sont reliés par une colle conductrice, de préférence une colle de graphite aux contacts (10, 11, 12) des couches électriquement conductrices (2, 3).

13. Procédé de fabrication d'un microdétecteur selon la revendication 1, où les couches noyées, électriquement conductrices, sont produites par implantation d'ions.

14. Procédé de fabrication d'un microdétecteur selon la revendication 1, où les couches électriquement conductrices sont réalisées par dépôt à partir de la phase gazeuse, où le gaz utilisé contient un agent de dopage en une concentration appropriée.

15. Procédé de fabrication d'un microdétecteur selon la revendication 6, où tout d'abord, les couches électriquement conductrices sont produites dans le substrat en diamant à des températures de 800°C à 1600°C par implantation d'ions, suivi de l'établissement des contacts électriques par implantation à haute dose à température ambiante.

16. Procédé de fabrication d'un microdétecteur à partir d'un matériau semiconducteur selon l'une des revendications 7 à 11, où le dopage latéralement structuré d'une couche électriquement conductrice est produit par implantation d'ions focalisée.

17. Utilisation d'un microdétecteur selon la revendication 1, pour la mesure de la dureté.

18. Utilisation d'un microdétecteur selon la revendication 10, pour la mesure de la dureté, où l'échantillon semiconducteur sert de pénétrateur de mesure, à partir de la tenue à la pénétration duquel dans une surface de corps solide est déterminée la dureté du matériau.

19. Utilisation d'un microdétecteur selon la revendication 10, pour la mesure de la capacité thermique et de la conductibilité thermique, où sont exécutés avec l'échantillon semiconducteur des mesures de température à une surface de matériau.

20. Utilisation d'un microdétecteur selon la revendication 10 pour l'usinage de matériau avec enlèvement de copeaux, où l'échantillon semiconducteur est réalisé comme outil destiné à enlever des copeaux.

21. Utilisation d'un microdétecteur selon la revendication 1, comme pointe de test pour un microscope à balayage.
